# EUROPÄISCHE PATENTSCHRIFT

(11) **EP 3 170 237 B1**
(45) Veröffentlichungstag und Bekanntmachung des Hinweises auf die Patenterteilung: **25.10.2023**
(21) Anmeldenummer: 15738627.7
(22) Anmeldetag: 16.07.2015
(51) Int. Cl.: H02H 9/08

(54) **VORRICHTUNG ZUR FEHLERSTROMABSENKUNG**
DEVICE TO REDUCE RESIDUAL CURRENT
DISPOSITIF D'ABAISSEMENT DE COURANT DE DÉFAUT

(30) Priorität: 16.07.2014 DE 102014109952
(43) Veröffentlichungstag der Anmeldung: 24.05.2017
(73) Patentinhaber: Eaton Intelligent Power Limited, Dublin 4 (IE)
(72) Erfinder: KOCH, Michael, 2100 Korneuburg (AT)
(74) Vertreter: Epping - Hermann - Fischer
(86) Internationale Anmeldenummer: PCT/EP2015/066273
(87) Internationale Veröffentlichungsnummer: WO 2016/008978

(56) Entgegenhaltungen:
- EP-A2- 2 091 123
- DE-A1-102011 055 371
- SU-A1- 1 473 000
- US-A1- 2013 314 828

## Beschreibung

Die Erfindung betrifft eine Vorrichtung zur Fehlerstromabsenkung in einem elektrischen Kreis gemäß dem Oberbegriff des Patentanspruches 1.

Es ist bekannt, und in den meisten Ländern gesetzlich vorgeschrieben, elektrische Kreise auf das Auftreten sog. Fehlerströme bzw. Erdfehlerströme zu überwachen. Wird ein solcher Fehlerstrom festgestellt, welcher einen bestimmten Wert überschreitet, wird der betreffende elektrische Kreis durch einen Fehlerstromschutzschalter abgeschaltet. Der entsprechende Wert für das Abschalten eines elektrischen Kreises beträgt beispielsweise lediglich 30 mA, die Grenze für Herzkammerflimmern beim Menschen.

Nachteilig daran ist, dass neben der eigentlichen Fehlerquelle auch alle übrigen elektrischen Geräte abgeschaltet werden. In der gegenwärtig üblichen Situation ist es nicht möglich eine elektrische Installationsanordnung mit einem entsprechend niederohmigen Erdschluss weiter zu betreiben. Der jeweilige Fehlerstromschutzschalter, wird sofort abschalten, sobald versucht wird, den betreffenden Schaltkreis bzw. die betreffende Installationsanordnung wieder in Betrieb zunehmen. Die Anlage kann erst nach Behebung des Fehlers wieder in Betrieb genommen werden.

Aus der SU 1 473 000 A1 ist bekannt in elektrischen Systemen, welche kein "gutes Erdpotential" aufweisen, ein Mehrphasennetz zu symmetrieren, um derart einen Fehlerstrom zu begrenzen. Dabei erfolgt auch eine Absenkung der Ausgangsspannung.

Die US 2013/0314828 A1 beschreibt eine Anordnung zur Fehlerstrombegrenzung, wobei magnetisch mittels eines Transformators ein Widerstand eingekoppelt werden kann.

Die DE 10 2011 055 371 A1 beschreibt eine leistungsbegrenzende Generatorerdung, wobei vorgesehen ist, in einem Erdungspfad einen Transistor anzuordnen, um derart direkt den Fehlerstrom zu begrenzen. Eine Absenkung der Spannung, mit der nachgeschaltete Geräte betrieben werden, ist nicht beschrieben.

Aufgabe der Erfindung ist es daher eine Vorrichtung der eingangs genannten Art anzugeben, mit welcher die genannten Nachteile vermieden werden können, und mit welcher bei Auftreten eines Fehlerstromes, und Fortbestand der entsprechenden Ursache, ein eingeschränkter Betrieb elektrischer Geräte aufrecht erhalten werden kann.

Erfindungsgemäß wird dies durch die Merkmale des Patentanspruches 1 erreicht.

Dadurch kann bei Auftreten eines Fehlerstromes, und Fortbestand der entsprechenden Ursache, ein eingeschränkter Betrieb elektrischer Geräte aufrecht erhalten werden, sofern der Fehler, welcher den Erdschluss verursacht hat nicht zu niederohmig ist. Dadurch kann etwa eine EDV-Anlage betrieben werden, bzw. einfache Beleuchtungskörper. Insbesondere die Verwendung elektrischer Geräte mit geringer Leistungsaufnahme, welche ein Schaltnetzteil aufweisen, ist dadurch praktisch ohne Einschränkung möglich, da die anliegende Versorgungsspannung bei derartigen Schaltnetzteilen über weite Bereiche variiert werden kann. Dadurch kann etwa bis zum Eintreffen eines Elektrikers an einem Computer gearbeitet werden. Dadurch kann beispielsweise ein Netzwerkzuggang weiterhin betrieben werden.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

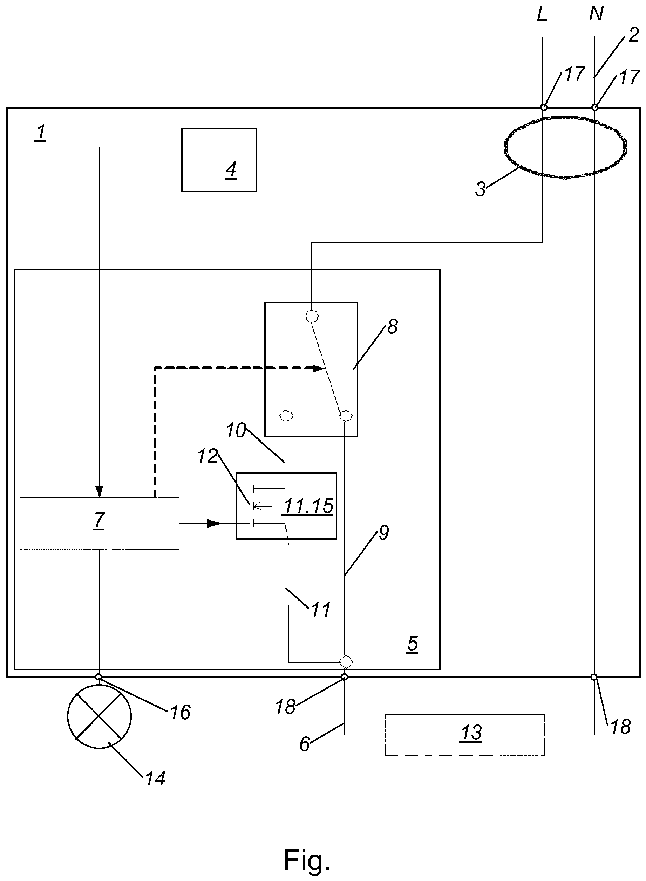

Die Erfindung wird unter Bezugnahme auf die beigeschlossene Zeichnung, in welcher eine lediglich bevorzugte Ausführungsform beispielhaft dargestellt ist, näher beschrieben. Die einzige Figur zeigt dabei ein Blockschaltbild bzw. eine stilisierte Darstellung einer Ausführungsform einer gegenständlichen Vorrichtung zur Fehlerstromabsenkung in einem elektrischen Kreis.

Die Figur zeigt eine Vorrichtung 1 zur Fehlerstromabsenkung in einem elektrischen Kreis 2, insbesondere einer elektrischen Niederspannungsleitung, wobei die Vorrichtung 1 einen Fehlerstromsensor 3 und eine Strommesseinheit 4 aufweist, wobei ein Ausgang des Fehlerstromsensors 3 mit einem Eingang der Strommesseinheit 4 verbunden ist, wobei die Vorrichtung 1 eine Spannungsabsenkungseinheit 5 aufweist, wobei die Spannungsabsenkungseinheit 5 mit einem Ausgang der Strommesseinheit 4 verbunden ist, und wobei die Spannungsabsenkungseinheit 5 ausgebildet ist, die - nachfolgend der Vorrichtung 1 anliegende - elektrische Spannung in Anhängigkeit der Höhe des gemessenen Fehlerstromes abzusenken, um den gemessenen Fehlerstrom auf einen vorgebbaren Wert, insbesondere 30 mA, zu begrenzen.

Dadurch kann bei Auftreten eines Fehlerstromes, und Fortbestand der entsprechenden Ursache, ein eingeschränkter Betrieb elektrischer Geräte 13 aufrecht erhalten werden, sofern der Fehler, welcher den Erdschluss verursacht hat nicht zu niederohmig ist. Dadurch kann etwa eine EDV-Anlage betrieben werden, bzw. einfache Beleuchtungskörper. Insbesondere die Verwendung elektrischer Geräte 13 mit geringer Leistungsaufnahme, welche ein Schaltnetzteil aufweisen, ist dadurch praktisch ohne Einschränkung möglich, da die anliegende Versorgungsspannung bei derartigen Schaltnetzteilen über weite Bereiche variiert werden kann. Dadurch kann etwa bis zum Eintreffen eines Elektrikers an einem Computer gearbeitet werden. Dadurch kann beispielsweise ein Netzwerkzuggang weiterhin betrieben werden.

Die gegenständliche Vorrichtung 1 ist für den Einsatz im Bereich eines Niederspannungsnetzes, insbesondere im Bereich eines Endverbrauchers elektrischer Energie vorgesehen. Als Niederspannung werden dabei insbesondere Spannungen im Bereich von max. 400V Wechselspannung bzw. 600V Gleichspannung angesehen. Bevorzugt ist vorgesehen, dass eine gegenständliche Vorrichtung 1 lediglich in einem einzigen elektrischen Kreis einer größeren elektrischen Installationsumgebung angeordnet ist. Bevorzugt ist ein Einsatz der gegenständlichen Vorrichtung 1 nicht im Bereich Hochspannungs- und Mittelspannungstechnik, sowie im Bereich kommunaler, regionaler oder überregionaler Energieverteilungsanlagen vorgesehen.

Die gegenständliche Vorrichtung dient dazu, beim Auftreten eines sog. Fehlerstromes bzw. Erdfehlerstromes die elektrische Spannung, welche an der Fehlerstelle vorherrscht, derart weit abzusenken, dass der Fehlerstrom so weit absinkt, dass es zu keiner Gefährdung von Menschen bzw. Anlagen, und auch nicht zu einem Auslösen eines, nicht dargestellten, Fehlerstromschutzschalters kommt. Übliche Grenzwerte für Fehlerströme sind 30 mA im Bereich des Personenschutzes und 300 mA im Bereich des Brand- und Anlagenschutzes, jeweils bei 240V Netzen. Dabei können auch andere Grenzwerte vorgesehen sein.

Die Vorrichtung 1 ist dazu vorgesehen im Bereich eines Verteilerschrankes eines elektrischen Anlage angeordnet zu werden, und weist entsprechend zumindest zwei Eingänge 17 zum Anschluss wenigstens eines Neutralleiters N und einer Phase L auf, sowie eine der Anzahl der Eingänge 17 entsprechende Anzahl an Ausgängen 18. Es ist vorgesehen, die betreffende Vorrichtung 1 derart in einer elektrischen Umgebung zu integrieren, dass allfällige Fehler lediglich am Ausgang 18 der Vorrichtung 1 erwartet werden, daher, dass sämtliche elektrischen Verbraucher bzw. Geräte 13 nachfolgend der Vorrichtung 1 angeschlossen sind.

Die Vorrichtung 1 zur Fehlerstromabsenkung in einem elektrischen Kreis 2 bzw. Teilkreis weist einen Fehlerstromsensor 3 und eine Strommesseinheit 4 auf. Der Fehlerstromsensor 3 kann dabei in an sich bekannter Weise als Summenstromwandler ausgebildet sein, wobei die Versorgungsleitungen N, L die Primärleiter bilden und weiters eine Sekundärwicklung vorgesehen ist. Derartige Summenstromwandler sind auf dem Gebiet der Fehlerstromschutzschalter bekannt. Es kann auch vorgesehen sein, den Fehlerstromsensor 3 anders auszubilden, etwa umfassend Förstersondern, Hallsensoren oder Shunt-Widerstände.

An einen Ausgang des Fehlerstromsensors 3 ist eine Strommesseinheit angeschlossen. Dabei kann auch vorgesehen sein, dass wenigstens Teile des Fehlerstromsensors 3 und der Strommesseinheit 4 einstückig ausgebildet sind.

Die Vorrichtung 1 weist eine Spannungsabsenkungseinheit 5 zur vorgebbaren Absenkung bzw. Reduktion einer elektrischen Spannung in dem elektrischen Kreis 2 auf. Die an den Ausgängen 18 der Vorrichtung 1 anliegende Spannung wird daher gegenüber der an den Eingängen 17 der Vorrichtung 1 anliegenden Spannung vermindert.

Die Spannungsabsenkungseinheit 5 ist mit einem Ausgang der Strommesseinheit 4 verbunden, und ist ausgebildet, die - nachfolgend der Vorrichtung 1 anliegende - elektrische Spannung in Anhängigkeit der Höhe des gemessenen Fehlerstromes abzusenken, um den gemessenen Fehlerstrom auf einen vorgebbaren Wert zu begrenzen bzw. entsprechend abzusenken.

Dabei kann vorgesehen sein, dass die Vorrichtung 1 ständig einen auftretenden Fehlerstrom misst und entsprechend regelnd in den elektrischen Kreis 2 eingreift. Es kann aber auch vorgesehen sein, dass die Vorrichtung im Normalbetrieb der elektrischen Anlage nicht betrieben wird, und erst nach einem Abschalten des Kreises 2 durch einen Fehlerstromschutzschalter durch einen Benutzer in Betrieb genommen wird bzw. werden muss.

Die Spannungsabsenkungseinheit 5 ist seriell in einer Leitung 6 des elektrischen Kreises 2, daher einer Verbindung zwischen einem der Eingänge 17 und einem der Ausgänge 18 der Vorrichtung 1, angeordnet.

Gemäß der Erfindung, weist die Spannungsabsenkungseinheit 5 eine Steuer- und/oder Regeleinheit 7 auf, wobei ein Ausgang der Strommesseinheit 4 mit einem Eingang der Steuer- und/oder Regeleinheit 7 verbunden ist, wodurch der jeweils tatsächlich auftretende Fehlerstrom als Regelgröße zur Verfügung steht.

Die Spannungsabsenkungseinheit 5 weist gemäß der Erfindung eine Umschalteinheit 8 zum Umschalten zwischen einem Normalbetriebszweig 9 und einem Absenkzweig 10 auf. Der Normalbetriebszweig 9 ist vorzugsweise als Durchkontaktierung zwischen einem der Eingänge 17 und dem entsprechenden Ausgang 18 ausgebildet. Die Umschalteinheit 8 kann sowohl elektromechanisch ausgebildet sein, als auch mittels Halbleiterschalelementen.

Erfindungsgemäß ist in dem Absenkzweig 10 wenigstens ein Widerstand 11 angeordnet, wobei bevorzugt ein ohmscher Widerstand vorgesehen ist. Gemäß der Erfindung ist vorgesehen, dass der Widerstand 11 einen regelbaren Widerstand 15 umfasst oder als regelbarer Widerstand 15 ausgebildet ist, und dass der regelbare Widerstand 15 mit der Steuer- und/oder Regeleinheit 7 verbunden ist. Dadurch ist eine unmittelbare Einflussnahe auf den Spannungsabfall innerhalb des elektrischen Kreises 2 möglich. Als regelbarer Widerstand 15 kann dabei auch eine schaltbare Widerstandskaskade angesehen werden.

Bevorzugt weist der regelbare Widerstand 15 zumindest einen Transistor 12 auf, welcher mit der Steuer- und/oder Regeleinheit 7 verbunden ist.

Die Vorrichtung weist weiters einen Signalausgang 16 und/oder ein Signalmittel 14 auf, welche aktiv geschaltet werden, sobald die Vorrichtung 1 die Spannung an deren Ausgängen 18 reduziert.

Zur Fehlerstromabsenkung in einem elektrischen Kreis 2 ist dabei vorgesehen, dass ein auftretender Fehlerstrom mittels eines Fehlerstromsensors 3 aufgenommen und nachfolgend von einer Strommesseinheit 4 gemessen wird. Mittels der Umschalteinheit 8 wird ein Widerstand 11 in den elektrischen Kreis 2 geschaltet. Dies erfolgt entweder manuell, oder automatisch, sofern die Steuer- und/oder Regeleinheit 7 erkennt, dass der momentan auftretende Fehlerstrom einen vorgebbaren Umschaltwert überschreitet. Dieser Umschaltwert kann dabei identisch zu dem vorgegebenen Wert bzw. Grenzwert eines Fehlerstromes sein. Bevorzugt ist der Umschaltwert jedoch geringer als der Grenzwert, beispielsweise 80% des Grenzwertes, sodass etwa die entsprechende Umschaltung bereits erfolgt, wenn der auftretende Fehlerstrom einen Wert von 80% des Grenzwertes erreicht hat.

Nachfolgend regelt die Steuer- und/oder Regeleinheit 7 den Widerstandswert des Widerstands 11 bzw. des regelbaren Widerstandes 15 in Anhängigkeit der Höhe des gemessenen Fehlerstromes, um den gemessenen Fehlerstrom auf einen vorgebbaren Wert, insbesondere 30 mA, zu begrenzen. Dies hat ein Absinken der an den Ausgängen 18 der Vorrichtung 1 anliegenden Spannung zur Folge. Es kann dabei vorgesehen sein, dass diese Spannung nur bis zu einem vorbestimmten Wert abgesenkt wird, und dass bei Unterschreiten dieses Wertes ein nicht dargestellter Schutzschalter von der Vorrichtung 1 ausgelöst wird, und derart das gesamte Netz 2 abgeschaltet wird.

## Patentansprüche

1. Vorrichtung (1) zur Fehlerstromabsenkung in einem elektrischen Kreis (2), insbesondere einer elektrischen Niederspannungsleitung, wobei die Vorrichtung (1) zumindest zwei Eingänge (17) zum Anschluss wenigstens eines Neutralleiters (N) und einer Phase (L), sowie eine der Anzahl der Eingänge (17) entsprechende Anzahl an Ausgängen (18) aufweist, wobei die Ausgänge zum Anschließen von elektrischen Verbraucher (13) geeignet sind, wobei die Vorrichtung (1) einen Fehlerstromsensor (3) und eine Strommesseinheit (4) aufweist, wobei ein Ausgang des Fehlerstromsensors (3) mit einem Eingang der Strommesseinheit (4) verbunden ist, wobei die Vorrichtung (1) eine Spannungsabsenkungseinheit (5) aufweist, wobei die Spannungsabsenkungseinheit (5) ausgebildet ist, die, an Ausgängen (18) der Vorrichtung (1) anliegende Spannung gegenüber der an Eingängen (17) der Vorrichtung (1) anliegenden, Spannung in Anhängigkeit der Höhe des gemessenen Fehlerstromes abzusenken, um den gemessenen Fehlerstrom auf einen vorgebbaren Wert, insbesondere 30 mA, zu begrenzen, wobei die Spannungsabsenkungseinheit (5) seriell in einer Verbindung zwischen einem der Eingänge (17) und einem der Ausgänge (18) der Vorrichtung (1) angeordnet ist, **dadurch gekennzeichnet, dass** die Spannungsabsenkungseinheit (5) eine Steuer- und/oder Regeleinheit (7) aufweist, wobei ein Ausgang der Strommesseinheit (4) mit einem Eingang der Steuer- und/oder Regeleinheit (7) verbunden ist, dass die Spannungsabsenkungseinheit (5) eine Umschalteinheit (8) zum Umschalten zwischen einem Normalbetriebszweig (9) und einem Absenkzweig (10) aufweist, dass in dem Absenkzweig (10) wenigstens ein, einen regelbaren Widerstand (15) umfassender, Widerstand (11) angeordnet ist, dass der regelbare Widerstand (15) mit der Steuer- und/oder Regeleinheit (7) verbunden ist, und dass die Steuer- und/oder Regeleinheit (7) den Widerstandswert des regelbaren Widerstandes (15) in Abhängigkeit der Höhe des gemessenen Fehlerstromes regelt, um den gemessenen Fehlerstrom auf einen vorgebbaren Wert, insbesondere 30 mA, zu begrenzen.

2. Vorrichtung (1) nach Anspruch 1, **dadurch gekennzeichnet, dass** die Vorrichtung (1) ist für den Einsatz im Bereich eines Niederspannungsnetzes bis max. 600V Gleichspannung vorgesehen ist.

3. Vorrichtung (1) nach Anspruch 1 oder 2, **dadurch gekennzeichnet, dass** der regelbare Widerstand (15) einen Transistor (12) aufweist, welcher mit der Steuer- und/oder Regeleinheit (7) verbunden ist.

## Claims

1. Device (1) for reducing residual current in an electrical circuit (2), in particular an electrical low-voltage line, the device (1) comprising at least two inputs (17) for connecting at least one neutral conductor (N) and a phase (L), and a number of outputs (18) corresponding to the number of inputs (17), the outputs being suitable for connecting electrical consumers (13), the device (1) comprising a residual current sensor (3) and a current measuring unit (4), an output of the residual current sensor (3) being connected to an input of the current measuring unit (4), the device (1) comprising a voltage reduction unit (5), the voltage reduction unit (5) being designed to reduce the voltage applied to outputs (18) of the device (1) with respect to the voltage applied to inputs (17) of the device (1) on the basis of the level of the measured residual current in order to limit the measured residual current to a predefinable value, in particular 30 mA, the voltage reduction unit (5) being arranged in series in a connection between one of the inputs (17) and one of the outputs (18) of the device (1), **characterized in that** the voltage reduction unit (5) has a control and/or regulation unit (7), an output of the current measuring unit (4) being connected to an input of the control and/or regulation unit (7), **in that** the voltage reduction unit (5) has a switching unit (8) for switching between a normal operation branch (9) and a reduction branch (10), **in that** at least one resistor (11) comprising a controllable resistor (15) is arranged in the reduction branch (10), **in that** the controllable resistor (15) is connected to the control and/or regulation unit (7), and **in that** the control and/or regulation unit (7) controls the resistance value of the controllable resistor (15) on the basis of the level of the measured residual current in order to limit the measured residual current to a predefinable value, in particular 30 mA.

2. Device (1) according to claim 1, **characterized in that** the device (1) is provided for use in the region of a low-voltage network up to a maximum of 600 V DC voltage.

3. Device (1) according to claim 1 or claim 2, **characterized in that** the controllable resistor (15) has a transistor (12) which is connected to the control and/or regulation unit (7).

## Revendications

1. Dispositif (1) permettant la réduction de courant de fuite dans un circuit électrique (2), en particulier une ligne basse tension électrique, dans lequel le dispositif (1) présente au moins deux entrées (17) pour le raccordement d'au moins un fil neutre (N) et d'une phase (L), ainsi qu'un certain nombre de sorties (18) correspondant au nombre d'entrées (17), dans lequel les sorties sont adaptées pour le raccordement de consommateurs (13) électriques, dans lequel le dispositif (1) présente un capteur de courant de fuite (3) et une unité de mesure de courant (4), dans lequel une sortie du capteur de courant de fuite (3) est connectée à une entrée de l'unité de mesure de courant (4), dans lequel le dispositif (1) présente une unité de réduction de tension (5), dans lequel l'unité de réduction de tension (5) est configurée pour réduire, en fonction de l'amplitude du courant de fuite mesuré, la tension appliquée aux sorties (18) du dispositif (1) par rapport à la tension appliquée aux entrées (17) du dispositif (1) afin de limiter le courant de fuite mesuré à une valeur pouvant être prédéterminée, en particulier à 30 mA, dans lequel l'unité de réduction de tension (5) est disposée en série dans une connexion entre l'une des entrées (17) et l'une des sorties (18) du dispositif (1), **caractérisé en ce que** l'unité de réduction de tension (5) présente une unité de commande et/ou de réglage (7), dans lequel une sortie de l'unité de mesure de courant (4) est connectée à une entrée de l'unité de commande et/ou de réglage (7), **en ce que** l'unité de réduction de tension (5) présente une unité de commutation (8) pour la commutation entre une branche de fonctionnement normal (9) et une branche de réduction (10), **en ce que**, dans la branche de réduction (10), au moins une résistance (11) comprenant une résistance réglable (15) est disposée, **en ce que** la résistance réglable (15) est connectée à l'unité de commande et/ou de réglage (7), **et en ce que** l'unité de commande et/ou de réglage (7) règle la valeur de résistance de la résistance réglable (15) en fonction de l'amplitude du courant de fuite mesuré afin de limiter le courant de fuite mesuré à une valeur pouvant être prédéterminée, en particulier à 30 mA.

2. Dispositif (1) selon la revendication 1,
**caractérisé en ce que** le dispositif (1) est prévu pour être utilisé à l'intérieur d'un réseau basse tension jusqu'à une tension continue d'au maximum 600 V.

3. Dispositif (1) selon la revendication 1 ou 2, **caractérisé en ce que** la résistance réglable (15) présente un transistor (12) connecté à l'unité de commande et/ou de réglage (7).
